# EUROPEAN PATENT SPECIFICATION

(11) **EP 1 088 181 B1**
(45) Date of publication and mention of the grant of the patent: **19.11.2003**
(21) Application number: 98962655.1
(22) Date of filing: 09.12.1998
(51) Int. Cl.: F16K 3/14

(54) **DEVICE FOR STOPPING AND INTERRUPTING THE FLOW IN A PIPE**
MITTEL UM DEN DURCHLUSS IN EINEM ROHR ZU VERHINDERN
DISPOSITIF SERVANT A COUPER UN ECOULEMENT DANS UN CONDUIT

(30) Priority: 24.06.1998 IT MI981443
(43) Date of publication of application: 04.04.2001
(73) Proprietor: Mastromatteo, Ciro, I-36043 Camisano Vicentino (VI) (IT)
(72) Inventor: Mastromatteo, Ciro, I-36043 Camisano Vicentino (VI) (IT)
(74) Representative: Mannucci, Michele
(86) International application number: IT9800354
(87) International publication number: WO00001967

(56) References cited:
- DE-C- 4 218 877
- FR-A- 1 062 486
- US-A- 3 038 692
- US-A- 3 695 578
- US-A- 3 743 244

## Description

### Technical Field

The present invention relates to a device for stopping and interrupting the flow in a pipe.

### Prior Art

Devices known as valves or gate valves are in use for stopping and interrupting the flow in a pipe. These generally comprise a body in which are formed two ports into which lead the two sections of pipe whose flow is to be stopped and interrupted. In a cavity essentially perpendicular to the ports is a movable member, normally displaced by a screw control member so as to cover or open the two ports as the case may be.

In these known devices the movable member consists for example of a wedge or of a round-tipped frustum of a cone of rigid material, e.g. pressed brass, in some cases coated with an elastomer having the function of a seat. The elastomer layer is applied by processes such as thermoforming or vulcanization and therefore the movable member and the elastomer material form a single body.

These known devices have the principle drawback of requiring large axial compressive stresses at the ports in order to close the ports and thus interrupt the flow. Torsional stresses are also present, which lead to values dose to or exceeding the limit of elastic deformability of the sealing material. Under these conditions there are permanent deformations of the material, which partly bulges out into the port openings, and these deformations compromise the seal. Furthermore, these known devices require mechanical and thermoforming or vulcanizing processes to apply the seal, which means that manufacturing costs and the costs of any repairs or replacements are very high. A device according to the preamble of claim 1 is disclosed in FR-A-1.062.486.

### Objects of the Invention

It is an object of the present invention to provide a device for stopping and interrupting the flow in a pipe, which will overcome the drawbacks of conventional devices. In particular, it is an object of the invention to produce an interrupting device in which the seal is not subject to the above drawbacks because both the forces of axial compression and those of torsion are absent on the sealing surfaces.

Another object of the invention is to produce such a device in which replacement of the seal, when necessary, is rapid and can be carried out without the use of tools.

### Summary of the Invention

These and other objects and advantages, which will become clear to those skilled in the art on reading the text which follows, are achieved with a device for stopping the flow in a pipe according to claim 1.

The device according to the invention basically comprises: a body with an internal cavity; a shutoff member which is movable along an axial direction of displacement in said internal cavity; and at least two fluid passage ports opened in walls of said cavity that are inclined to the direction of displacement of the shutoff member. The shutoff member comprises sealing means for the closure of said ports, with sealing surfaces inclined to the direction of displacement. Moreover, the shutoff member comprises a first substantially rigid inner part to which said sealing means are fitted in such a way as to be able to slide relative to the inner part, said inner part and said sealing means being in mutual contact on sliding surfaces inclined to said direction of displacement. The seal is made of elastomeric material and is able to slide relative to the shutoff member, so that during the closure of the stop device the shutoff member drives the sealing means until they engage with means of arrest formed in the cavity of the body and, as the closure movement of the shutoff member continues, the inner part slides relative to the sealing means, causing compression of said seating means against said ports. This avoids generating large axial stresses and eliminates shearing and torsional forces in the material of the sealing means.

In practice, the movement along the direction of displacement of the inner part of the shutoff member sets up repulsive compressive forces, i.e. directed from the axis of the shutoff member toward the ports. The repulsive compressive forces squeeze the sealing surfaces against the inclined walls of the inner cavity of the body in which the ports are formed.

Besides eliminating or substantially reducing the undesired stresses in the seals of the shutoff member, the device according to the invention also makes it an easy matter to replace the seals in case of wear.

In the description that follows, reference will be made to a shutoff member in the shape of a wedge, but it is apparent that similar advantages can be obtained with a shutoff member of frustoconical shape or some other equivalent shape. The inclined walls of the cavity of the body of the device in which the ports are formed will correspond in shape to the sealing surfaces of the shutoff member. Hereinbelow, and in the accompanying claims, reference is made to inclined sealing surfaces and inclined sliding surfaces between the sealing means and the inner part of the shutoff member. This should be understood in general terms as also meaning different portions of a single conical or equivalent surface.

In one practical embodiment, the sealing means are made from an elastomeric material and the inner part of the shutoff member is made from a basically rigid and selflubricating material, e.g. glass fiber-filled nylon®.

To produce an effective connection between the sealing means and the inner part of the shutoff member that will allow mutual sliding during closure and mutual retention during opening, in one particularly advantageous embodiment of the invention the sealing means are fitted with a flexible upper connection for the connection between said sealing means and said inner part, said flexible connection deforming when said sealing means slide relative to said inner part. In practice this may be achieved by means of a slender framework, that is to say a framework with elongate elements that readily deform elastically by bending.

The slender framework may also comprise a ring that engages in an annular neck integral with the inner part.

The sealing means may have flat surfaces that rest directly on the inclined walls in which the ports are formed. However, to reduce the compression necessary for leaktightness, in one preferred embodiment the sealing means comprise for each port a corresponding annular outline in relief (of suitable shape, e.g. rectangular, square, circular or oval) which is compressed around the ports in the closed condition. This reduces the area of contact between the sealing means and the walls and therefore increases, for a given compressive stress, the specific pressure.

The inclined walls in which the ports are formed and the inclined sealing surfaces of the sealing means that come into contact with said walls present preferably the same inclination, because this gives an approximately equal compression over the whole of the sealing means, although there may be a slight difference of inclination, which can be compensated for by differentiated compression of the sealing means. It is also advantageous if the sliding surfaces on which the sealing means are in contact with the inner part of the shutoff member have the same inclination as the walls in which the fluid passage ports are situated and as the sealing surfaces.

In accordance with one particularly advantageous embodiment, the shutoff member is of a wedge shape. In this case the inclined sliding surfaces of the inner part may be joined to each other by side walls containing grooves in which corresponding arcuate joining sections between the sealing surfaces of said sealing means engage, said arcuate sections allowing said sealing surfaces to be moved apart.

Other advantageous features of the device according to the invention are indicated in the dependent claims.

### Brief Description of the Drawings

The features, objects and advantages of the present invention will be made clearer by the following description and by the attached drawings relating to non-restrictive examples of embodiments, In the drawing:
Fig. 1 shows an exploded sectional view of a stopping and interrupting device according to the present invention;
Fig. 2 shows a perspective view of the inner part of the shutoff member of the device shown in Fig. 1;
Fig. 3 shows a perspective view of the sealing means of the device shown in Fig. 1:
Figs. 4A, 4B and 4C show sectional views of the device of Fig. 1, assembled, and with the ports open, closed and sealed, respectively, with a protective cap partly fitted, absent and fully fitted, respectively;
Fig. 5 shows an exploded axonometric view of a different embodiment of the device according to the invention;
Fig. 6 shows an axonometric view of the device shown in Fig. 5 in the assembled state without the protective cover; and
Fig. 7 shows a section through the device shown in Figs. 5 and 6, with the protective cap being fitted.

### Detailed Description of Preferred Embodiments of the Invention

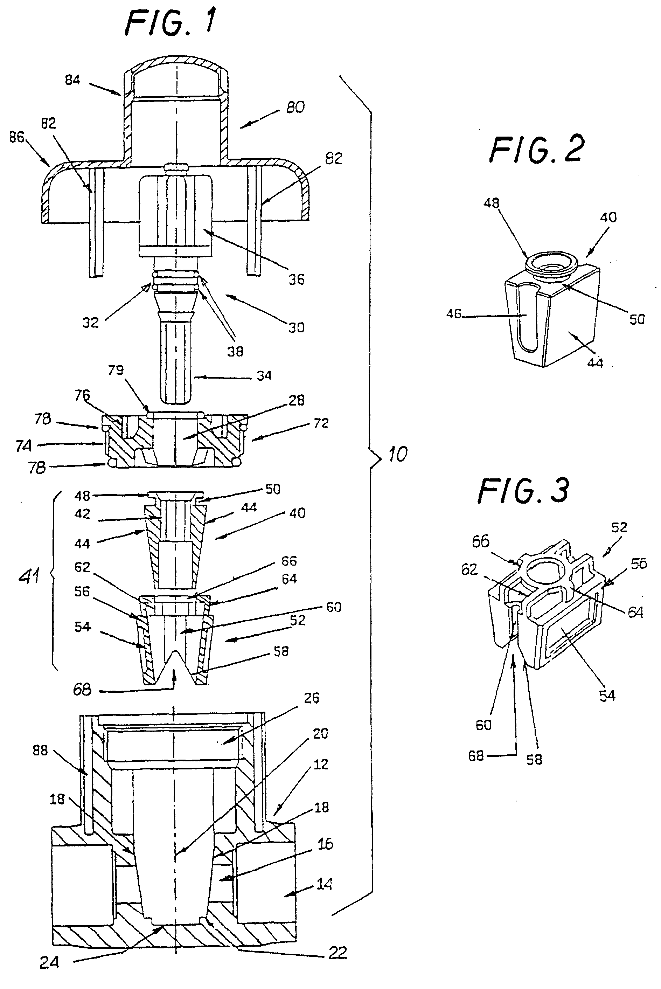

With initial reference to Figs. 1-4, the stop device 10 of the present invention comprises an essentially hollow body 12 to which there are transversely attached, by means of housings 14, which may e.g. be threaded, the two sections of pipe whose flow is to be stopped and interrupted. Connection may also be effected in other ways, for example by adhesive bonding or by fusion. The housings 14 communicate via ports 16 formed in the inclined walls 18 of a cavity 20 inside the body 12. The inclined walls 18 end in steps 22 that join up across a sunken part 24 of the cavity 20.

In the top of the cavity 20 of the body 12 is a partially internally threaded housing 26 in which may be engaged a cap part 72 which is externally threaded 74. On the top of the cap part 72 are shaped holes 76 for screwing it into the body 12 with a suitable tool. O rings 78 maintain leaktlghtness between the cap part 72 and the body 12.

A central hole 28 in the cap part 72 can receive, in such a way that it can rotate freely without transiation, a central part 32 of a control member, bearing the general reference 30, having a knob portion 36 on top and a portion consisting of a threaded rod 34 at the bottom. O rings 79 and 38, the former in the central hole 28 of the cap part 72 and the latter on the central part 32 of the control member 30, prevent leaks between these components when the device 10 is in the assembled state.

The threaded rod 34 of the control member 30 produces translational movement of the stopping and interrupting shutoff member, which has the general reference 41 and consists of both a movable inner part, hereinafter termed the rigid first wedge 40, and a sealing part or hollow second wedge 52 attached to the latter and forming the sealing means.

The movable inner first part or rigid wedge 40, also shown in perspective in Fig. 2, contains a threaded central hole 42 to take the threaded rod 34 of the control member 30 and to be moved translationally inside the cavity 20 of the body 12. The rigid wedge 40 possesses two inclined surfaces 44 and two grooves 46 on its side walls. The central hole 42 ends at the top in an outward edge 48 which lies over an annular neck 50.

The hollow second wedge 52, made of an elastomeric material and having the sealing function, is also shown in perspective in Fig. 3. The hollow second wedge 52 essentially comprises two inclined surfaces 54 having outlines in relief 56 connected to lateral surfaces 58 with arcuate re-entrant sections 60 in the center. The outlines in relief 56 form the sealing surfaces. The surfaces 54, 58 of the hollow second wedge 52 are crowned by a slender framework with flexible sections 62, 64 connected to a circular ring 66. The lateral surfaces 58 of the hollow second wedge 52 incorporate openings 68 beneath the arcuate sections 60. This configuration allows the inclined surfaces 54 of the hollow wedge 52 to move apart when the device 10 is in use, as explained later.

Returning to Fig. 1, in order to protect the control member 30 against infiltration of substances which would damage it, for example sand or mortar, the device 10 has a protective cover 80 with flexible rods 82, a smaller-diameter part 84 and a larger-diameter part 86. The smaller-diameter part 84 protects the knob portion 36 of the control member 30, while the larger-diameter part 86 covers the hole in the wall where the device 10 is housed when the rods 82 are pushed into slots 88 formed in the body 12 at the sides of the cavity 20. The rods 82 not only support the cover 80 and keep it connected to the body 12 of the device 10 but also serve as distance pieces to adjust the axial distance of the cover 80 from the wall so that the knob 36 is covered independently of the depth of the body 12 in the wall. Advantageously, when carrying out the finishing of the location of the device 10 in the wall, the visible surface of the protective cap 80 receives a chrome plating treatment.

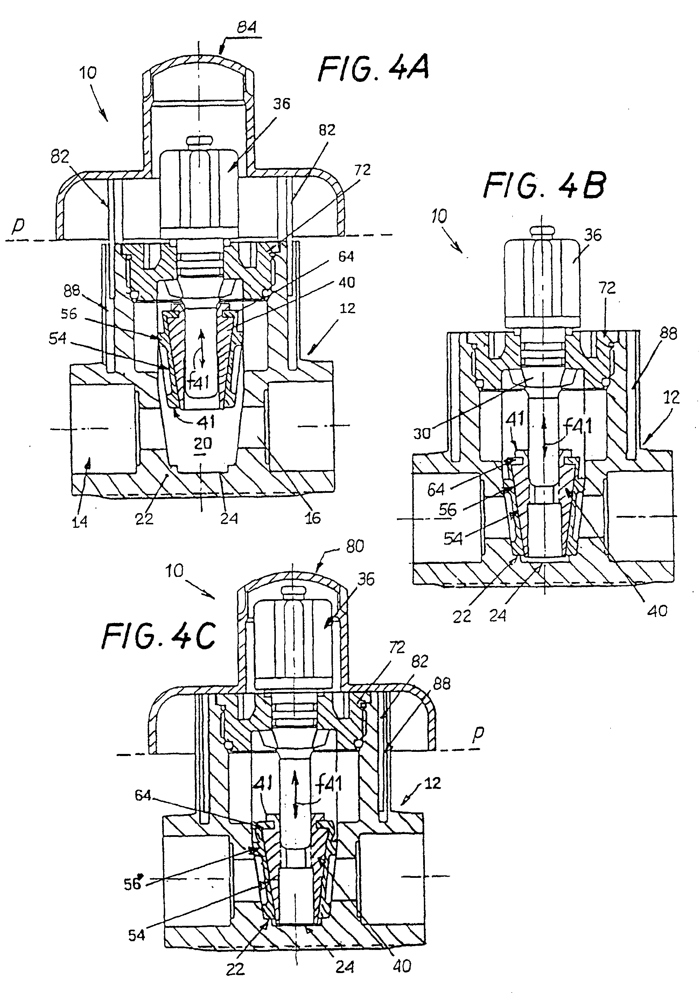

With reference to Figs. 4A-4C, in the assembled state of the device 10 the hollow wedge 52 is fitted on in such a way as to completely surround the walls of the rigid wedge 40 and remains connected to it because of the circular ring 66 which fits into the annular neck 50 where it is covered by the overlying outward edge 48. In particular, the inclination of the walls 54 of the hollow wedge 52 is equal to the inclination of the walls 44 of the rigid wedge 40 and the arcuate sections 60 engage in its grooves 46. The two wedges 40, 52 therefore move axially together, in the cavity 20 of the body 12, when the control member 30 is turned by means of the knob 36 from the open position shown in Fig. 4A to the closed position shown in Fig. 48. In the position of Fig. 4B the hollow wedge 52 has reached its limit point on the steps 22 of the cavity 20 of the body 12. In this position its lateral walls 54 with the outlines in relief 56 have already begun to stop the flow between the ports 16 as they bear against the inclined walls 18 of the cavity 20 in which the ports 16 are formed. The inclination of the walls 18 relative to the direction of displacement (arrow f41) of the control member 30 and of the shutoff member 41 is approximately equal to the inclination of the sealing surfaces defined by the outlines in relief 56 and of the rigid inner wedge 40.

From the position of Fig. 4B, the axial compression exerted by the continued axial translational movement of the rigid wedge 40, whose surfaces 44 slide against the inner surfaces corresponding to the inclined surfaces 54 of the hollow wedge 52, is discharged and absorbed by the flexible sections 62, 64 of the slender framework of the hollow wedge 52, which deform by bulging outwards in such a way as to protect the inclined surfaces 54 from undesired axial compressive stresses. The openings 68 in the side walls 58 of the hollow wedge 52 allow it to dilate and the arcuate sections 60 expand inside the grooves 46 of the rigid wedge 40, following the movements of the inclined surfaces 54 of the hollow wedge 52 when these surfaces, stressed from within by the sliding movement of the rigid wedge 40 relative to the hollow wedge 52, are compressed from the inside out against the walls 18.

As can be seen in Fig. 4C, in its axial translational movement the rigid wedge 40 passes beyond the margin of the steps 22 of the cavity 20 and its bottom reaches the sunken part 24 of the cavity 20. By this movement the rigid wedge 40 has axially compressed the flexible sections 62, 64 of the slender framework, causing them to bulge, and simultaneously has generated (through the inclined sliding surfaces 44 between rigld wedge 40 and hollow wedge 42) a powerful compression and therefore a repulsive compression which compresses the outlines 56 of the inclined surfaces 54 against the edges of the ports 16 of the cavity 20 of the body 12 in order to stop the flow. Moreover, the torsional force on the hollow wedge 52 is zero, and its service life will therefore be longer.

Figs. 4A and 4C also show the protective cover 80 in two different axial positions with respect to the body 12. In Fig. 4, the distance between the axis of the ports 16 of the body 12 and the limit of the hole in the wall P which is to be covered by the larger-diameter part 86 of the cover 80 is at its maximum, while in Fig. 4C this distance is at its minimum. This adjustment relative to the depth of the body 12 below the surface is permitted, as has been pointed out, by the ability of the flexible rods 82 of the cover 80 to be slid in and out of the slots 88 of the body 12. Fig. 4B illustrates how the device 10 can be used even without the protective cover 80, e.g. where it is necessary to have the knob 36 of the control member 30 in view for rapid intervention. In the same way it must be obvious that the protective cover 80 can be fitted to flow stopping and interrupting devices of a different type to the device set forth above.

From the illustrations and description it will be understood that the seal is effected by two independent, superimposed parts, the inner part or rigid first wedge 40 and the sealing means or hollow wedge 52, which move as one down as far as the steps 22 of the cavity 20, while the continued translational movement of the rigid wedge 40 generates an axial compression on the hollow wedge 52, which is discharged and absorbed by the slender framework, and a force in the direction of the walls 18. The bulging of the slender framework can be further encouraged when the thickness of its flexible sections 62, 64 is made less than the thickness of the outlines in relief 56 of the inclined walls 54 of the hollow second wedge 52, The central part of the rigid wedge 40 transmits repulsive compressive forces to the sealing surfaces 54, and in particular to their outlines 56, frontally compressing them against the edges of the ports 16 and thus closing and sealing off the pipes 16. The presence of the outlines in relief 56 allows the seal to be established without expanding and deforming the sealing surfaces 54, thus preventing them from pushing into the ports 16.

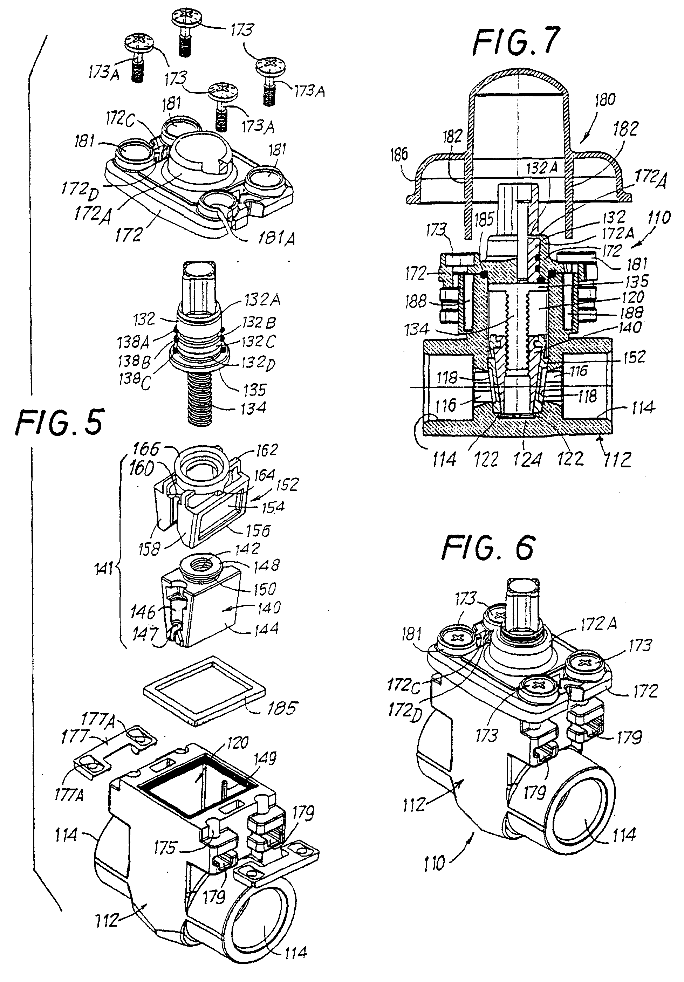

Figs. 5-7 show a modified embodiment of the device according to the invention. Parts that are identical to or correspond to those of the example of an embodiment shown in the previous Figs. 1-4 are labeled with the same reference numerals increased by 100.

The device bears the general reference 110. It has a generally hollow body 112 with threaded housings or connectors 114 for an admission pipe and a delivery pipe (not shown).

The housings 114 communicate with each other via ports 116 formed in inclined walls 118 in a cavity 120. 122 denotes steps provided at the bottom of the inclined walls 118 and joined up by a sunken part 124 of the cavity 120.

The cavity 120 houses a movable shutoff member bearing the general reference 141 and comprising a movable first member or rigid wedge 140 (corresponding to the wedge 40) containing a central threaded hole 142 in which is engaged a threaded pin 134 of a control member 130 by which the shutoff member 141 is moved translationally within the cavity 120. The rigid wedge 140 possesses two plane walls inclined to the axis of the threaded hole 142, one of which walls is visible in Fig. 5 and labeled 144. On its side walls the rigid wedge 140 has grooves 146 approximately parallel to the axis of the threaded hole 142. The threaded central hole 142 ends at the top in an outward edge 148 above an annular neck 150.

A seal 152 constructed in the form of a hollow wedge of elastomeric material, corresponding essentially to the hollow wedge 52 of the previous embodiment, is fitted onto the rigid wedge 140. The hollow wedge 152 possesses two inclined surfaces, one of which is visible in Fig. 5 and labeled 154. It is roughly rectangular and is surrounded by an outline in relief 156 which forms the seating surface around the corresponding port 116. A similar outline is provided on the opposite inclined surface (cp. Fig. 7), The outlines in relief 154 meet lateral surfaces 158 joined by arcuate sections 160. When the hollow wedge 152 of elastomeric material is fitted onto the rigid wedge, the arcuate sections 160 engage in the grooves 146 of the rigid wedge 140.

The hollow second wedge 152 comprises on its top a slender framework with flexible sections 162, 164 connected by a circular ring 166. In much the same way as described previously with reference to the embodiment illustrated in Figs. 1-4, the configuration of the elastomeric hollow wedge 152 and of the rigid wedge 140 is such as to permit relative movement along the direction of the central axis (axis of the threaded hole 142) between the two parts, for the objects already described above.

Compared with the previous embodiment, in Figs. 5-7 the hollow elastomeric wedge 152 is distinguished by the greater height of the circular ring 166 which, in the assembled state, projects above the outward edge 148 of the rigid wedge 140, as shown clearly in Fig. 7. This means that when the shutoff member 141 is lifted as high as it will go by turning the control member 130, the top surface of the circular ring 166 will abut against a disk at the end of the threaded portion 134 of the control member 130. This applies a force to the hollow wedge 152 which tends to push the latter down relative to the rigid wedge 140, so that the hollow wedge is retumed to its original position with respect to the rigid wedge prior to the relative displacement caused by the hollow wedge 152 butting against the steps 122, as described with reference to the embodiment shown in Figs. 1-4.

In addition, the rigid wedge 140 comprises, on its lateral surfaces, pairs of guiding protrusions 147 which, when the wedge is inside the space 120, engage with straight ribs 149 (cp, Fig. 5). In this way the shutoff member formed by the wedges 140 and 152 is guided by the ribs 149 as it is moved inside the cavity 120 for opening and closing purposes. Besides smoother operation when the shutoff member is being opened and closed, this arrangement reduces or eliminates the vibrations induced in the shutoff member 140, 152 by the flow of liquid when the device is in the open state.

The cavity 120 in the body 12 is closed at the top by a cap 172 having similar functions to those of the cap 72, but a different shape. The cap 172 is fixed to the body 112 of the device by four screws 173 which, in the assembled state, pass through holes 175 (cp. Fig. 5) formed in the body 112 of the device, and engage in resilient plates 177 with two holes containing clips 177A into which the screws 173 are screwed and which also serve to prevent their coming unscrewed. The plates 177 are housed in cavities 179 in corresponding external protrusions from the body 112. Seats 181 are formed in the cap 172 to house the heads of the screws 177. The seats 181 are bounded by cylindrical walls and internally are in the form of through holes each having an annular projection 181A (cp. top of Fig. 5) to retain the screws and prevent them dropping out accidentally. To this end the screws 173 include a portion of the shank that is of a smaller diameter, labeled 173A in Fig. 5.

Between the cap 172 and the body 112 of the device is a rectangular seal 185 which is compressed when the screws 173 are tightened down.

The closure system using the four screws 173 replaces the threaded portion 26 and the thread 74 of the cover 72 of the embodiment shown in Figs. 1-4. The use of four screws with associated plates and clips means that it is possible to make the body 112 and cap 172 entirely of plastic, e.g. polypropylene, without the need to use metal inserts to form the threads, as would be appropriate in the case of the thread formed in the portion 26 of the previous embodiment.

The cap 172 has a central through hole 128 in which a cylindrical portion 132 of the control member 130 engages in such a way as to be free to rotate without translation. The cylindrical portion 132 has an annular groove 132A into which an annular projection 172B of a flange portion 172A of the cap 172 fits with a snap action. In this way the control member 130 is retained axially in the cap 172.

Three further annular grooves 132B, 132C, 132D are formed in the cylindrical portion 132 of the control member 130 for three corresponding O rings 138A, 138B, 138C, the last of which also serves as a damping element between the control member 130 and the cap 172.

Also formed in the cap 172 are two openings 172C into which the rods 182, of a cover 180, similar to the flexible sections 82 of the cover 80 of the previous embodiment, are inserted. The openings 172C contain flexible tabs 172D whose purpose is to retain the rods 182 of the cover 180 by friction. The cover 180 comprises, as in the previous case, a smaller-diameter portion 184 and a larger-diameter portion 186. The rods 182 are also inserted into the slots 188, equivalent to the slots 88, in the body 112.

The operation of the device shown in Figs. 5-7 is essentially the same as that already described for the embodiment shown in Figs. 1-4 and requires no further explanation.

It will be realized that the wedge shape of the shutoff member is preferable, but that the concept on which the invention is based can be applied to other shapes, for example frustocanical, of the closure member and of the seal, the constructional modifications being obvious to those skilled in the art, as also it will be obvious that numerous modifications, adaptations, additions, variations and substitutions may be applied to the example of an embodiment described above by way of non-restrictive illustration without thereby departing from the scope of the invention as determined by the attached claims which follow.

## Claims

1. A device for stopping the flow in a pipe, comprising: a body (12; 112) with an internal cavity (20; 120); a shutoff member (41; 141) which is movable along a direction of displacement in said internal cavity (20; 120); and at least two fluid passage ports (16; 116) opened in walls (18; 118) of said cavity that are inclined to the direction of displacement of the shutoff member; and in which said shutoff member comprises sealing means (52; 152) with sealing surfaces (56; 156) for the closure of said ports, said sealing surfaces being inclined to the direction of displacement, wherein said shutoff member further comprises a first substantially rigid inner part (40, 140) to which said sealing means (52; 152) are fitted in such a way as to be able to slide relative to the inner part, said inner part (40; 140) and said sealing means being in mutual contact on sliding surfaces (44; 144) inclined to said direction of displacement, so that during the closure of the stop device the shutoff member (41; 141) drives the sealing means (52; 152) until they engage with means of arrest (22; 122) and, as the closure movement of the shutoff member continues, the inner part (40; 140) slides relative to the sealing means (52; 152), causing compression of said sealing means against said ports (16; 116),
**characterized in that**:
said sealing means (52; 152) are made from a flexible elastomeric material;
and said inner part (40; 140) supports said flexible elastomeric sealing means (52; 152) in correspondence of said sealing surfaces (56; 156).

2. The device as claimed in claim 1, **characterized in that** said inner part (40; 140) is acted on by a control member (30; 130) that extends along the direction of displacement of the shutoff member.

3. The device as claimed in claim 1 or 2, **characterized in that** said inner part is made from a selflubricating plastics material.

4. The device as claimed in one or more of the previous claims, **characterized in that** said sealing means (52; 152) comprise a flexible upper connection (62, 64; 162, 164) for the connection between said sealing means (52; 152) and said inner part (40; 140), said flexible connection deforming when said sealing means slide relative to said inner part.

5. The device as claimed in claim 4, **characterized in that** said flexible connection comprises a slender framework.

6. The device as claimed in claim 5, **characterized in that** said slender framework also comprises a ring (66; 166) that engages in an annular neck (50; 150) integral with said inner part (40; 140).

7. The device as claimed in claim 6 in combination with claim 2, **characterized in that** said ring (166) is of a greater height than said annular neck (150) and projects axially above it to be acted on by a disk (135) integral to said control member (130).

8. The device as claimed in one or more of the previous claims, **characterized in that** said sealing means comprise for each port (16; 116) a corresponding outline in relief (56; 156) which is compressed around the ports in the closed condition.

9. The device as claimed in one or more of the previous claims, **characterized in that** said inclined walls (18; 118) in which the ports (16; 116) are formed and the inclined sealing surfaces of said sealing means that come into contact with said walls present the same inclination.

10. The device as claimed in claim 9, **characterized in that** said sliding surfaces between the sealing means and the inner part (44; 144) of the shutoff member (41; 141) present, relative to the direction of displacement, the same inclination as the inclined walls (18; 118) and as the inclined surfaces of the sealing means.

11. The device as claimed in one or more of the previous claims, **characterized in that** the inner part (40; 140) is of a wedge shape, and **in that** said sealing means are of a hollow wedge shape.

12. The device as claimed in claim 10, **characterized in that** the inclined sliding surfaces (44; 144) of said inner part are joined to each other by side walls containing grooves (46; 146) in which corresponding arcuate joining sections (60; 160) between the sealing surfaces of said sealing means (52; 152) engage, said arcuate sections allowing said sealing surfaces to be moved apart. claims,

13. The device as claimed in one or more of the previous claims, **characterized in that** said inner part comprises lateral guiding protrusions (147) engaging with straight ribs (149) that extend in said cavity (120) along the direction of displacement of said shutoff member (141).

14. The device as claimed in one or more of the previous claims, **characterized in that** said control member (30; 130) is inserted with freedom to rotate without translation in a cap (72; 172) fixed to the body (12; 112).

15. The device as claimed in claim 14, **characterized in that** said cap is fixed to the body by means of a thread (74) engaging in a threaded portion (26) on the inside of the cavity (20) of said body (12).

16. The device as claimed in claim 14, **characterized in that** said cap (172) is fixed to the body (112) by means of a plurality of screws engaging in spring-action plates (177) inserted in corresponding seats (179) in the body.

17. The device as claimed in one or more of the previous claims, **characterized in that** said control member (30; 130) is fitted with a plurality of annular seals between said control member and the cap (72; 172), at least one of which has a damping function.

18. The device as claimed in one or more of the previous claims, **characterized in that** it comprises a protective cover (80; 180) that can be fixed to the body (12; 112) at a variable distance from the axis of said ports (16; 116) by the sliding engagement of rods (82; 182) in corresponding slots (88; 188) in the body (12; 112).

19. The device as claimed in claim 18, **characterized in that** said body is fitted with a cap (172) comprising openings (172C) containing flexible tabs (172D) for retaining the rods (182) of the cover (180) in the desired position by friction.

20. The device as claimed in one or more of the previous claims, **characterized in that** said body, said cap, said inner part of the shutoff member and said control member are made entirely of plastics material.

## Patentansprüche

1. Vorrichtung zum Stoppen des Durchflusses in einem Rohr, umfassend:
ein Gehäuse (12, 112) mit einem inneren Hohlraum (20, 120); ein Absperrglied (41, 141), das in dem inneren Hohlraum (20, 120) längs einer Verschieberichtung bewegbar ist; und
mindestens zwei Fluiddurchlassöffnungen (16, 116) die in Wänden (18, 118) des Hohlraums geöffnet sind, welche in der Verschieberichtung des Absperrgliedes geneigt sind; und wobei das Absperrglied ein Abdichtmittel (52, 152) mit Abdichtflächen (56, 156) für das Verschließen der Öffnungen aufweist, wobei die Abdichtflächen zur Verschieberichtung geneigt sind, wobei das Absperrglied ferner umfaßt einen ersten, im wesentlichen starren Innenteil (40, 140), an dem die Abdichtmittel (52, 152) so angeordnet sind, dass sie relativ zum Innenteil verschiebbar sind, wobei der Innenteil (40, 140) und das Abdichtmittel miteinander an Gleitflächen (44, 144) in Kontakt sind, die zu der Verschieberichtung geneigt sind, sodass beim Schließen der Absperrvorrichtung das Absperrglied (41, 141) das Abdichtmittel (52, 152) antreibt, bis es an Anschlagmitteln (22, 122) zur Anlage kommt, und bei Fortsetzung der Bewegung des Absperrgliedes der Innenteil (40, 140) sich relativ zu dem Abdichtmittel (52, 152) verschiebt und dadurch eine Kompression des Abdichtmittels gegen die Öffnungen (16, 116) bewirkt,
**dadurch gekennzeichnet, dass**:
das Abdichtmittel (52, 152) aus flexiblem elastomerem Material besteht,
und der Innenteil (40, 140) das flexible elastomere Abdichtmittel (52, 152) im Bereich der Abdichtflächen (56, 156) abstützt.

2. Vorrichtung nach Anspruch 1, **dadurch gekennzeichnet, dass**
auf den Innenteil (40, 140) ein Betätigungsglied (30, 130) einwirkt, das sich längs der Verschieberichtung des Absperrgliedes erstreckt.

3. Vorrichtung nach Anspruch 1 oder 2, **dadurch gekennzeichnet, dass** der Innenteil aus einem selbstschmierenden Kunststoffmaterial besteht.

4. Vorrichtung nach einem oder mehreren vorangehenden Ansprüche,
**dadurch gekennzeichnet, dass** das Abdichtmittel (52, 152) eine flexible obere Verbindung (62, 64; 162, 164) für die Verbindung zwischen dem Abdichtmittel (52, 152) und dem Innenteil (40, 140) aufweist, wobei die flexible Verbindung sich verformt, wenn sich das Abdichtmittel relativ zu dem Innenteil verschiebt.

5. Vorrichtung nach Anspruch 4, **dadurch gekennzeichnet, dass**
die flexible Verbindung ein schlankes Rahmengerüst umfaßt.

6. Vorrichtung nach Anspruch 5, **dadurch gekennzeichnet, dass**
das schlanke Rahmengerüst auch einen Ring (66, 166) aufweist, der in eine ringförmige Nut (50, 150) eingreift, die an dem Innenteil (40, 140) ausgebildet ist.

7. Vorrichtung nach Anspruch 6 in Kombination mit Anspruch 2,
**dadurch gekennzeichnet, dass** der Ring (166) eine größere Höhe als die Ringnut (150) aufweist und axial über diese hervorragt, um von einer an dem Betätigungsglied (130) vorgesehenen Scheibe (135) beaufschlagt zu werden.

8. Vorrichtung nach einem oder mehreren der vorangehenden Ansprüche,
**dadurch gekennzeichnet, dass** das Abdichtmittel für jede Öffnung (16, 116) einen entsprechenden vorspringenden Umriß (56, 156) aufweist, der im Schließzustand um die Öffnungen herum komprimiert wird.

9. Vorrichtung nach einem oder mehreren der vorangehenden Ansprüche,
**dadurch gekennzeichnet, dass** die geneigten Wände (18, 118), in denen die Öffnungen (16, 116) ausgebildet sind, und die geneigten Abdichtflächen des Abdichtmittels, die mit den Wänden in Kontakt kommen, die gleiche Neigung aufweisen.

10. Vorrichtung nach Anspruch 9, **dadurch gekennzeichnet, dass**
die Abdichtflächen zwischen dem Abdichtmittel und dem Innenteil (44, 144) des Absperrgliedes (41, 141) relativ zur Verschieberichtung die gleiche Neigung wie die geneigten Wände (18, 118) und die geneigten Oberflächen des Abdichtmittels aufweisen.

11. Vorrichtung nach einem oder mehreren der vorangehenden Ansprüche,
**dadurch gekennzeichnet, dass** der Innenteil (40, 140) keilförmig ist, und dass das Abdichtmittel die Form eines hohlen Keiles hat.

12. Vorrichtung nach Anspruch 10, **dadurch gekennzeichnet, dass**
die geneigten Gleitflächen (44, 144) des Innenteils miteinander durch Seitenwände verbunden sind, die Nuten (46, 146) aufweisen, in die entsprechende bogenförmige Verbindungsabschnitte (60, 160) zwischen den Abdichtflächen des Abdichtmittels (52, 152) eingreifen, wobei es die bogenförmigen Abschnitte ermöglichen, dass sich die Abdichtflächen auseinander bewegen.

13. Vorrichtung nach einem oder mehreren der vorangehenden Ansprüche,
**dadurch gekennzeichnet, dass** der Innenteil seitliche Führungsvorsprünge (147) aufweist, die an geradlinigen Rippen (149) eingreifen, die in dem Hohlraum (120) längs der Verschieberichtung des Absperrgliedes (141) verlaufen.

14. Vorrichtung nach einem oder mehreren der vorangehenden Ansprüche,
**dadurch gekennzeichnet, dass** das Betätigungsglied (30, 130) drehbar, aber unverschiebbar in einem Deckel (72, 172) eingesetzt ist, der an dem Gehäuse (12, 112) befestigt ist.

15. Vorrichtung nach Anspruch 14, **dadurch gekennzeichnet, dass**
der Deckel an dem Gehäuse mittels eines Gewindes (74) befestigt ist, das in einen Gewindeabschnitt (26) an der Innenseite des Hohlraums (20) des Gehäuses (12) eingreift.

16. Vorrichtung nach Anspruch 14, **dadurch gekennzeichnet, dass**
der Deckel (172) an dem Gehäuse (112) durch mehrere Schrauben befestigt ist, die in Federplatten (177) eingreifen, die in entsprechende Sitze (179) in dem Gehäuse eingeschoben sind.

17. Vorrichtung nach einem oder mehreren der vorangehenden Ansprüche,
**dadurch gekennzeichnet, dass** das Betätigungsglied (30, 130) mit einer Anzahl von ringförmigen Dichtungen zwischen dem Betätigungsglied und dem Deckel (72, 172) eingesetzt ist, von denen mindestens eine eine Dämpfungsfunktion hat.

18. Vorrichtung nach einem oder mehreren der vorangehenden Ansprüche,
**dadurch gekennzeichnet, dass** sie eine Schutzabdeckung (80, 180) aufweist, die an dem Gehäuse (12, 112) in veränderbarem Abstand von der Achse der Öffnungen (16, 116) befestigbar ist durch den Gleiteingriff von Stangen (82, 182) in entsprechende Schlitze (88, 188) in dem Gehäuse (12, 112).

19. Vorrichtung nach Anspruch 18, **dadurch gekennzeichnet, dass**
das Gehäuse mit einem Deckel (172) versehen ist, der Öffnungen (172C) mit flexiblen Einsätzen (172D) aufweist zum Festhalten der Stangen (182) der Abdeckung (180) in der gewünschten Position durch Reibung.

20. Vorrichtung nach einem oder mehreren der vorangehenden Ansprüche,
**dadurch gekennzeichnet, dass** das Gehäuse, der Deckel, der Innenteil des Absperrgliedes und das Betätigungsglied vollständig aus Kunststoffmaterial bestehen.

## Revendications

1. Dispositif servant à couper l'écoulement dans un conduit, comprenant : un corps (12 ; 112) avec une cavité interne (20 ; 120) ; un organe de fermeture (41 ; 141), qui est amovible le long d'une direction de déplacement dans ladite cavité interne (20 ; 120) ; et au moins deux orifices de passage de fluide (16 ; 116) ouverts dans des parois (18 ; 118) de ladite cavité, qui sont inclinés dans la direction de déplacement de l'organe de fermeture ; et dans lequel ledit organe de fermeture comprend des moyens de scellage (52 ; 152) avec des surfaces de scellage (56 ; 156) pour la fermeture desdits orifices, lesdites surfaces de blocage étant inclinées dans la direction de déplacement, dans lequel ledit organe de fermeture comprend en outre une première pièce interne sensiblement rigide (40 ; 140), par rapport à laquelle lesdits moyens de scellage (52 ; 152) sont arrangés de façon telle qu'ils puissent glisser relativement à la pièce interne, ladite pièce interne (40 ; 140) et lesdits moyens de scellage étant mutuellement en contact au niveau des surfaces de glissement (44 ; 144) inclinées dans ladite direction de déplacement, de sorte que lors de la fermeture du dispositif d'arrêt, l'organe de fermeture (41 ; 141) fasse fonctionner les moyens de scellage (52 ; 152) jusqu'à ce qu'ils s'engagent auprès de moyens d'arrêt (22 ; 122) et, comme le mouvement de fermeture de l'organe de fermeture se poursuit, la pièce interne (40 ; 140) glisse relativement aux moyens de scellage (52 ; 152), causant la compression desdits moyens de scellage contre lesdits orifices (16 ; 116), **caractérisé en ce que** lesdits moyens de scellage (52 ; 152) sont fabriqués à partir d'un matériau élastomère flexible ; et ladite pièce interne (40 ; 140) supporte les moyens de scellage en élastomère flexible (52 ; 152) en correspondance avec lesdites surfaces de scellage (56 ; 156).

2. Dispositif selon la revendication 1, **caractérisé en ce que** ladite pièce interne (40 ; 140) est actionnée par un organe de commande (30 ; 130) qui s'étend le long de la direction de déplacement de l'organe de fermeture.

3. Dispositif selon la revendication 1 ou 2, **caractérisé en ce que** ladite pièce interne est fabriquée à partir d'un matériau plastique autolubrifiant.

4. Dispositif selon l'une ou plusieurs des revendications précédentes, **caractérisé en ce que** lesdits moyens de scellage (52 ; 152) comprennent un raccord supérieur flexible (62, 64 ; 162, 164) pour le raccordement desdits moyens de scellage (52 ; 152) et de ladite pièce interne (40 ; 140), ledit raccord flexible se déformant lorsque lesdits moyens de scellage glissent relativement à ladite pièce interne.

5. Dispositif selon la revendication 4, **caractérisé en ce que** ledit raccord flexible comprend une armature fine.

6. Dispositif selon la revendication 5, **caractérisé en ce que** ladite armature fine comprend également un anneau (66 ; 166) qui s'engage dans un cou de forme annulaire (50 ; 150) incorporé à ladite pièce interne (40 ; 140).

7. Dispositif selon la revendication 6 combinée avec la revendication 2, **caractérisé en ce que** ledit anneau (166) a une hauteur supérieure audit cou de forme annulaire (150) et s'avance au-dessus de lui axialement afin d'être actionné par un disque (135) incorporé audit organe de commande (130).

8. Dispositif selon l'une ou plusieurs des revendications précédentes, **caractérisé en ce que** lesdits moyens de scellage comprennent pour chaque orifice (16 ; 116) un contour correspondant en relief (56 ; 156), qui est comprimé autour des orifices dans la position fermée.

9. Dispositif selon l'une ou plusieurs des revendications précédentes, **caractérisé en ce que** lesdites parois inclinées (18 ; 118), dans lesquelles les orifices (16 ; 116) sont aménagés, et les surfaces de scellage inclinées desdits moyens de scellage qui viennent en contact avec lesdites parois présentent la même inclinaison.

10. Dispositif selon la revendication 9, **caractérisé en ce que** lesdites surfaces de glissement entre les moyens de scellage et la pièce interne (44 ; 144) de l'organe de fermeture (41 ; 141) présentent, relativement à la direction de déplacement, la même inclinaison que les parois inclinées (18 ; 118) et que les surfaces inclinées des moyens de scellage.

11. Dispositif selon l'une ou plusieurs des revendications précédentes, **caractérisé en ce que** la pièce interne (40 ; 140) est en forme de coin, et **en ce que** lesdits moyens de scellage ont une forme de coin en creux.

12. Dispositif selon la revendication 10, **caractérisé en ce que** les surfaces inclinées de glissement (44 ; 144) de ladite pièce interne sont jointes l'une à l'autre par des parois latérales contenant des gorges (46 ; 146), dans lesquelles des sections de jonction arquées correspondantes (60 ; 160) entre les surfaces de scellage desdits moyens de blocage (52 ; 152) s'engagent, lesdites sections arquées permettant auxdites surfaces de scellage d'être éloignées l'une de l'autre.

13. Dispositif selon l'une ou plusieurs des revendications précédentes, **caractérisé en ce que** ladite pièce interne comprend des protubérances latérales de guidage (147) s'engageant avec des nervures droites (149) qui s'étendent dans ladite cavité (120) le long de la direction de déplacement dudit organe de fermeture (141).

14. Dispositif selon l'une ou plusieurs revendications précédentes, **caractérisé en ce que** ledit organe de commande (30 ; 130) est inséré avec la liberté de tourner sans translation dans une capsule (72 ; 172) fixée au corps (12 ; 112).

15. Dispositif selon la revendication 14, **caractérisé en ce que** ladite capsule est fixée au corps au moyen d'un filetage (74) engagé dans une partie filetée (26) à l'intérieur de la cavité (20) dudit corps (12).

16. Dispositif selon la revendication 14, **caractérisé en ce que** ladite capsule (172) est fixée au corps (112) au moyen d'une pluralité de vis engagées dans des plaques de fonctionnement à ressort (177) insérées dans des supports correspondants (179) dans le corps.

17. Dispositif selon l'une ou plusieurs des revendications précédentes, **caractérisé en ce que** ledit organe de commande (30 ; 130) est positionné avec une pluralité de joints annulaires entre ledit organe de commande et la capsule (72 ; 172), dont au moins un d'entre eux a une fonction d'amortissement.

18. Dispositif selon l'une ou plusieurs des revendications précédentes, **caractérisé en ce qu'**il comprend un couvercle de protection (80 ; 180) qui peut être fixé au corps (12 ; 112) à une distance variable de l'axe desdits orifices (16 ; 116) à l'aide d'un engagement par glissement de tiges (82 ; 182) dans les fentes correspondantes (88 ; 188) dans le corps (12 ; 112).

19. Dispositif selon la revendication 18, **caractérisé en ce que** ledit corps est arrangé avec une capsule (172) comprenant des ouvertures (172C) contenant des plaquettes flexibles (172D) pour retenir les tiges (182) du couvercle (180) dans la direction désirée par frottement.

20. Dispositif selon l'une ou plusieurs des revendications précédentes, **caractérisé en ce que** ledit corps, ladite capsule, ladite pièce interne de l'organe de fermeture et ledit organe de commande sont fabriqués entièrement en matière plastique.
